# EUROPEAN PATENT SPECIFICATION

(11) **EP 2 119 605 B1**
(45) Date of publication and mention of the grant of the patent: **20.04.2011**
(21) Application number: 08156159.9
(22) Date of filing: 14.05.2008
(51) Int. Cl.: B60R 22/02, B60R 22/18, B60R 22/20, B60R 22/26

(54) **Vehicle safety belt system**
Sicherheitsgurtsystem für ein Fahrzeug
Système de ceinture de sécurité d'un véhicule

(43) Date of publication of application: 18.11.2009
(73) Proprietor: Ford Global Technologies, LLC, Dearborn, MI 48126 (US)
(72) Inventor: Kling, Anders, S-423 44 Torslanda (SE); Axelson, Anders, S-423 41 Torslanda (SE); Andersson, Lars-Erik, S-421 60 Västra Frölunda (SE)
(74) Representative: VALEA AB

(56) References cited:
- DE-A1-102004 017 643
- FR-A- 2 577 492
- FR-A- 2 655 300

## Description

### TECHNICAL FIELD

The present invention relates to a vehicle safety belt system, and particularly a four-point vehicle safety belt being designed to safely protect a person using the safety belt at angeled collisions.

### BACKGROUND OF THE INVENTION

Vehicles of different kinds are equipped with vehicle safety belt systems for preventing the occupant of a vehicle seat from being thrown out of the vehicle or being thrown around in the vehicle compartment in an uncontrolled manner in case of a collision or the like.

Most safety belt systems used in ordinary cars are of the three-point type, where a single continuous belt is attached to the frame of the vehicle at two different levels on the same side of the vehicle and has a slidably fitted clasp, that is connectable to a buckle provided on the opposite side of the seat. A retractor is provided at one of the attachment points for tightening around the user's body when the belt is buckled, and pulling the belt in to a retracted position, when not in use.

This type of three-point safety belt system is effective for most types of accidents and it is furthermore easy to buckle and unbuckle, as the user just has to grab the clasp and pull it over the chest and lap and insert it in the buckle, whereby the belt will be arranged over the lap and diagonally over the chest of the user.

If a vehicle should collide under an impact angle of about 45° between front and side of the vehicle or in roll-over situations, there is however a risk that a belted driver or passenger could slide out of the diagonal part of a conventional three-point safety belt.

By providing a four-point vehicle seat belt system, this problem can be eliminated or at least reduced, as the four-point vehicle seat belt will hold the occupant better in the seat and also reduces the torque on the torso of the occupant. Most four-point systems are however less user friendly.

WO 2004/009411 A1 discloses a vehicle seat belt system of the four point type, having a first and a second seat belt, with a two part buckle, a first part of which is attached to the first seat belt, whereas the second part thereof is attached to the second seat belt. The first buckle part is held by a receptacle, and when an occupant shall fasten the seat belt, the second buckle part is seized and connected to the first buckle part, whereby the seat belt will be arranged in a position similar to that of a conventional three-point safety belt. The system also incorporates a first retractor connected to the first seat belt and a second retractor connected to the second seat belt. When the two buckle parts have been interconnected and the receptacle has been operated to release the buckle, the two retractors retract the first and second seat belts such that the buckle is moved to a position wherein the two seat belts will extend cross-wise over the centre of the occupant's torso.

DE102004017643, which describes a safety belt according to the preamble of claim 1, discloses a safety belt device with a safety belt for protecting a vehicle occupant which is designed so that a movement of the upper body of the vehicle occupant in the event of an accident towards the interior of the vehicle and/or the centre of the vehicle is inhibited or at least braked. The direction changing points of the belly belt section and the shoulder belt section are at a distance apart at least in the event of an accident.

FR2655300 discloses an adjustable seat belt with a lap strap and a diagonal strap in which the diagonal strap is connected in an initial position to an anchor point which can be moved from a bottom lateral position to a top lateral position. One common end of the lap strap and of the diagonal strap is associated with the anchor point which itself is mounted so that it can move, particularly in the event of an impact or collision, under the action of an operating device and that a tensioning and locking means cooperates in holding the lap strap in position.

FR2577492 discloses a device making it possible to afford protection in the event of a frontal impact as well as in that of a side impact. It consists of a female catch which is fixed to the seat whilst a male catch is added to it at the belt. When the male catch is buckled into the female catch, this affords supplementary protection.

### SUMMARY OF THE INVENTION

The purpose of the present invention is to propose a user friendly vehicle safety belt system being as easy to handle as a conventional three-point vehicle seat belt system and still having the advantages of a four-point vehicle seat belt system, and this has been achieved with a vehicle safety belt system as defined in the accompanying claim 1.

### BRIEF DESCRIPTION OF THE DRAWINGS

Hereinafter the invention will be further described with reference to the accompanying drawings showing a non-limiting embodiment of a vehicle safety belt system according to the invention.
Fig. 1 is a perspective view showing schematically a vehicle seat according to the invention, with the vehicle safety belt coupled as a three-point safety belt.
Fig. 2 is a view corresponding to Fig. 1, but with the vehicle safety belt according to the invention in its position of use.
Fig. 3 shows in a front view the seat of Fig. 1 and 2 with the vehicle safety belt system according to the invention in an initial coupling position (broken lines) and with the vehicle safety belt coupled for use (continuous lines).

### DETAILED DESCRIPTION OF PREFERRED EMBODIMENTS

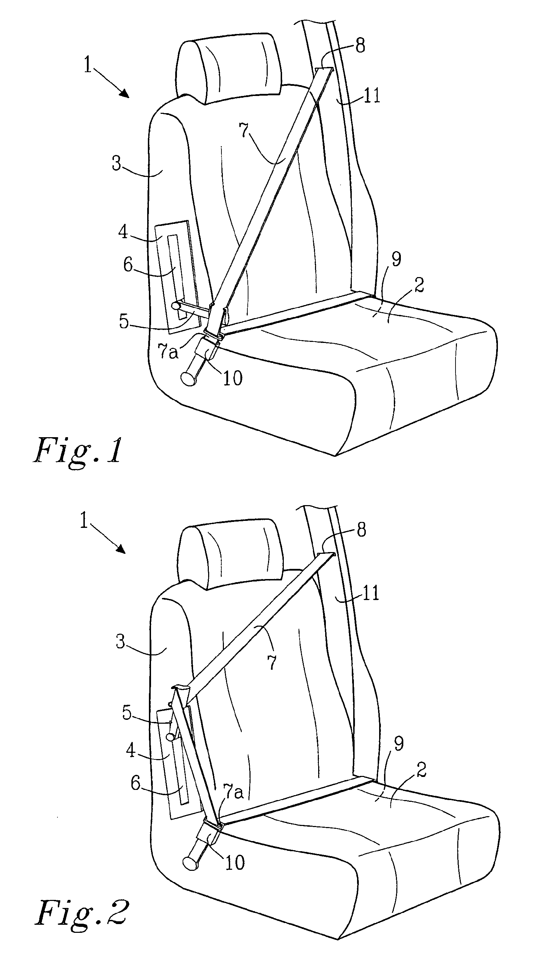

Fig. 1 shows schematically a perspective view of a vehicle seat 1 comprising a seat portion 2 and a back rest 3, and where there is provided at one side of the back rest 3 a mechanism 4 forming part of the vehicle safety belt system according to the invention. The mechanism 4 incorporates a loop 5, which is movable along a guide 6 extending mainly in the direction of the back rest 3. The loop 5 can be movable along the guide 6 under influence of a not shown motor, but alternatively it can also be manually operated by means of an appropriate link mechanism or the like. In the position shown in Fig. 1, the vehicle safety belt 7 is attached to an upper attachment point 8 and a lower attachment point 9 situated on the same side of the seat, whereas a clamp 7a, which is slidably attached to the belt 7, has been inserted in a buckle 10 positioned on the opposite side of the seat portion 2 at mainly the same level as the upper surface of the seat portion 2. In this position the belt 7 is arranged in the same manner as a conventional three-point belt, with the portion extending between the buckle 10 and the upper attachment point 8 extending diagonally over the chest and the torso of a person being belted therein.

In Fig. 2 is shown how the loop 5 has been operated (automatically or manually) to move upward along the guide 6, thereby carrying along the diagonal part of the belt 7, thus that the belt has received a fourth attachment point constituted by the loop 5, and which means that the angle of the upper part of the belt 7 will have a higher position over the chest of the user, thereby reducing the risk that the occupant of the seat shall slide out from the belt 7 even at angeled collisions.

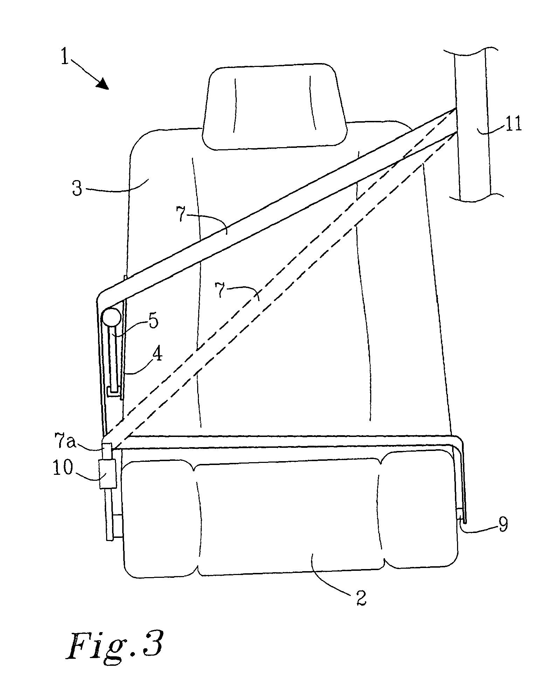

In Fig. 3, the vehicle seat of Fig. 1 is shown in a front view, and in this view is also shown a single piece safety belt 7, being attached to the frame 11 of a vehicle at an upper point 8 at a level above the back rest 3 and positioned a short distance outside the back rest 3, and at a lower point 9 positioned at the vehicle seat portion 2 on the same side of the vehicle seat 1 as the upper point 8. The safety belt 7 has a slidably connected clamp 7a, which is arranged to be inserted in a buckle 10 on the side of the seat portion 2 opposite to the attachment points 8, 9 for the belt 7.

A user to be belted, first has to grasp the clamp 7a and pull out the belt 7 and insert the clamp 7 in the buckle 10, whereby the safety belt 7 will have a portion extending over the upper surface of the seat portion 2, which corresponds to a lap portion of a user occupying the vehicle seat 1, and a diagonally arranged belt portion (shown in broken lines). At this time the belt 7 is arranged in a manner resembling to that of a buckled conventional three-point safety belt.

In this position the movable loop 5 can be activated either automatically via a motor or manually via a not further shown system, to move upwards, thereby hooking up the diagonally arranged part of the belt, and pulling it up to a position shown in continuous lines, where the diagonally arranged part of the belt has been raised to a higher level, thus that it will be at a higher level relative to the chest of a person being belted in the vehicle seat 1.

Therefore in this manner it has been designed a three-point safety belt, with an additional fourth attachment point configured by the movable loop 5, whereby the handling of the vehicle safety belt according to the invention is as easy as the handling of a conventional three-point safety belt, but where the influence by the movable loop 5 makes the belt take up a four point arrangement, with the chest part of the safety belt being positioned in a manner clearly reducing the risk that the belted seat occupant can slide out of the diagonal part of the belt at angeled collisions and the like.

The invention is not limited to the embodiment illustrated in the drawings and described with reference thereto, but modifications and variants are possible within the scope of the accompanying claims.

## Claims

1. A vehicle safety belt system for a vehicle seat (1) incorporating
a seat portion (2) and a back rest (3),
whereby the safety belt system incorporates a one-piece belt (7) having an upper and a lower attachment point (8, 9) situated on the same side of the seat portion (2),
a clamp (7a) sildingly mounted on the belt (7) and being insertable in a buckle (10) on the side of the seat portion (2) opposite to the attachment points (8, 9), such that a diagonally arranged part of the belt, when buckled is formed between the buckle (10) and the upper attachment point (8) wherein the belt (7), when buckled, being arranged to be hooked up by a loop (5), between the buckle (10) and the upper attachment point (8), which loop (5) is arranged to be movable along a guide (6) for positioning the upper part of the belt (7) to extend between the upper attachment point (8) and the loop (5) positioned above the buckle (10), **characterized in that**
the movable loop 5 can be activated either automatically via a motor or manually via a system, to move upwards, thereby hooking up the diagonally arranged part of the belt, and pulling it up to a position where the diagonally arranged part of the belt has been raised to a higher level.

2. A vehicle safety belt system as claimed in claim 1, wherein the guide (6) extends from a position in the level of the buckle (10) and upwardly.

3. A vehicle safety belt system as claimed in claim 1 or 2, wherein the loop (5) is driven to move along said guide (6) by means of a motor.

4. A vehicle safety belt system as claimed in anyone of the previous claims, wherein the loop (5) is automatically driven to move along said guide (6) upon inserting of the clamp in the buckle (10).

5. A vehicle safety belt system as claimed in anyone of the previous claims, wherein the loop (5) is arrestable in its extended position at the upper end of the guide (6).

6. A vehicle safety belt system as claimed in 1 or 2, wherein the loop (5) is manually operable.

## Patentansprüche

1. Ein Fahrzeug-Sicherheitsgurtsystem für einen Fahrzeugsitz (1), der einen Sitzbereich (2) und eine Rückenlehne (3) beinhaltet, wobei das Sicherheitsgurtsystem einen Gurt (7) aus einem Stück, der einen oberen und einen unteren Verankerungspunkt (8, 9) hat, welche sich auf der gleichen Seite des Sitzbereiches (2) befinden, und einen gleitend auf dem Gurt (7) angebrachten Klemmbügel (7a), der in ein Schloss (10) an der den Verankerungspunkten (8, 9) gegenüberliegenden Seite des Sitzbereiches (2) einführbar ist, so dass im angeschnallten Zustand ein diagonal liegender Teil des Gurts zwischen der Schnalle (10) und dem oberen Verankerungspunkt (8) gebildet wird, umfasst, wobei der Gurt (7), wenn er angeschnallt ist, so ausgelegt ist, dass er durch einen Führungshaken (5) zwischen dem Schloss (10) und dem oberen Verankerungspunkt (8) angehakt wird, wobei der Führungshaken (5) so ausgelegt ist, dass er entlang einer Führung (6) bewegt werden kann, um den oberen Teil des Gurtes (7) so positionieren zu können dass er sich zwischen dem oberen Verankerungspunkt (8) und dem oberhalb des Schlosses (10) angeordneten Führungshaken (5) erstreckt,
**dadurch gekennzeichnet, dass** der bewegliche Führungshaken (5) dahingehend aktiviert werden kann, dass er sich entweder automatisch über einen Motor oder manuell über ein System aufwärts bewegt, wodurch er am diagonal angelegten Teil des Gurtes anhakt und ihn nach oben in eine Position zieht, in welcher der diagonal angeordnete Teil des Gurtes in eine höhere Lage angehoben worden ist.

2. Ein Fahrzeug-Sicherheitsgurtsystem nach Anspruch 1, **dadurch gekennzeichnet, dass** sich die Führung (6) von einer Position auf der Höhe des Schlosses (10) an nach aufwärts erstreckt,

3. Ein Fahrzeug-Sicherheitsgurtsystem nach Anspruch 1 oder 2, **dadurch gekennzeichnet, dass** der Führungshaken (5) mit Hilfe eines Motors dazu gebracht wird, sich entlang der Führung (6) zu bewegen.

4. Ein Fahrzeug-Sicherheitsgurtsystem nach einem der vorhergehenden Ansprüche, **dadurch gekennzeichnet, dass** der Führungshaken (5) beim Einführen des Klemmbügels in das Schloss (10) automatisch dazu gebracht wird, sich entlang der Führung (6) zu bewegen.

5. Ein Fahrzeug-Sicherheitsgurtsystem nach einem der vorhergehenden Ansprüche, **dadurch gekennzeichnet, dass** der Führungshaken (5) in seiner ausgestreckten Position am oberen Ende der Führung (6) arretiert werden kann.

6. Ein Fahrzeug-Sicherheitsgurtsystem nach Anspruch 1 oder 2, **dadurch gekennzeichnet, dass** der Führungshaken (5) von Hand betätigt werden kann.

## Revendications

1. Système de ceinture de sécurité de véhicule pour un siège (1) de véhicule comprenant une partie formant l'assise (2) et un dossier (3),
le système de ceinture de sécurité comprenant une ceinture (7) d'une seule pièce ayant un point d'ancrage supérieur (8) et un point d'ancrage inférieur (9) situés sur un même côté de la partie formant l'assise (2),
un pêne (7a) monté coulissant sur la ceinture (7) et insérable dans une boucle d'encliquetage (10) du côté de la partie formant l'assise (2) opposé aux points d'ancrage (8, 9), de telle sorte qu'une partie de la ceinture, placée diagonalement lorsque celle-ci est bouclée, soit formée entre la boucle d'encliquetage (10) et le point d'ancrage supérieur (8),
la ceinture (7), lorsqu'elle est bouclée, étant prévue pour être gaffée et remontée par un passant (5), entre la boucle d'encliquetage (10) et le point d'ancrage supérieur (8), ledit passant (5) étant prévu mobile le long d'un guide (6) afin de positionner la partie supérieure de la ceinture (7) pour qu'elle s'étende entre le point d'ancrage supérieur (8) et le passant (5) positionné au-dessus de la boucle d'encliquetage (10),
***caractérisé en ce que*** le passant mobile (5) peut être actionné soit automatiquement par l'intermédiaire d'un moteur, soit manuellement par l'intermédiaire d'un système, afin de se déplacer vers le haut, en crochetant ainsi vers le haut la partie de la ceinture placée diagonalement, et en la tirant jusqu'à une position où la partie de la ceinture placée diagonalement a été remontée jusqu'à un niveau supérieur.

2. Système de ceinture de sécurité de véhicule selon la revendication 1, dans lequel le guide (6) s'étend à partir d'une position située au niveau de la boucle d'encliquetage (10) et vers le haut.

3. Système de ceinture de sécurité de véhicule selon la revendication 1 ou 2, dans lequel le passant (5) est entraîné le long dudit guide (6) au moyen d'un moteur.

4. Système de ceinture de sécurité de véhicule selon l'une quelconque des revendications précédentes, dans lequel le passant (5) est entraîné automatiquement le long dudit guide (6) lors de l'insertion du pêne dans la boucle d'encliquetage (10).

5. Système de ceinture de sécurité de véhicule selon l'une quelconque des revendications précédentes, dans lequel le passant (5) peut être arrêté dans sa position étendue au niveau de l'extrémité supérieure du guide (6).

6. Système de ceinture de sécurité de véhicule selon la revendication 1 ou 2, dans lequel le passant (5) est manoeuvrable manuellement.
